# EUROPEAN PATENT APPLICATION

(11) **EP 3 016 355 A1**
(43) Date of publication of application: **04.05.2016**
(21) Application number: 15786856.3
(22) Date of filing: 23.03.2015
(51) Int. Cl.: H04L 29/08

(54) **CLOUD VIRTUAL SERVER SCHEDULING METHOD AND DEVICE**

(30) Priority: 24.07.2014 CN 201410357045
(71) Applicant: Shenzhen Tinno Wireless Technology Co., Ltd, Guangdong 518053 (CN)
(72) Inventor: JING, Hua, Shenzhen City,Guangdong 518053 (CN); XIANG, Hao, Shenzhen City,Guangdong 518053 (CN)
(74) Representative: Morbidini, Marco
(86) International application number: PCT/CN2015/074872
(87) International publication number: WO 2016/011826

(57) **Abstract**

A cloud virtual server scheduling method includes based on the user request, determining whether a cloud virtual server cluster includes virtual servers in an idle state. Further, the method includes, when the cloud virtual server cluster includes virtual servers in the idle state, scheduling the virtual servers in the idle state to fulfill the user request. Accordingly, the present invention can improve usage of virtual servers, thereby saving sources.

## Description

### CROSS-REFERENCES TO RELATED APPLICATIONS

This application is a continuation application of PCT Patent Application No. PCT/CN2015/074872, filed on March 23, 2015, which claims priority of Chinese Application No. 201410357045.4, filed on July 24, 2014, the entire contents of all of which are hereby incorporated by reference.

### FIELD OF THE INVENTION

The present disclosure generally relates to the field of cloud computing technologies and, more particularly, relates to methods and apparatuses for scheduling cloud virtual servers.

### BACKGROUND

Cloud computing allows application software to be operated using internet-enabled devices, thus improving hardware resource utilization. Currently, when scheduling cloud virtual servers, because different users have different usages, and the configuration requirements are also different, the utilization rate of resources often is low.

Further, for most cloud service providers (such as Amazon, Alibaba), the management of the cloud virtual servers is implemented by users. That is, a user may start the virtual server when the user needs the virtual server, and the cloud service provider starts charging the user a fee. The user may turn off the virtual server when the user does not need the virtual server, and the cloud service provider stops charging the user the fee.

However, according to the present disclosure, such existing methods mainly provide convenience for the service providers to charge service fees, but has certain disadvantages. For example, in most cases, the user often does not continuously use the virtual server after the user starts the virtual server and, thus, even when the user does not use the virtual server, the virtual server resource may be still occupied.

Further, a reasonable scheduling method may greatly improve user experience and efficiency. The disclosed methods and apparatuses for scheduling the cloud virtual servers are directed to solve one or more problems set forth above and other problems.

### BRIEF SLTMMARY OF THE DISCLOSLTRE

The present invention is provided to solve the above technical problems and provides a cloud virtual server scheduling method and a cloud virtual server scheduling apparatus, which can improve usage of virtual servers.

One aspect of the present disclosure includes a cloud virtual server scheduling method. The method includes creating a cloud virtual server cluster including a first preset number of virtual servers; initializing the first preset number of virtual servers included in the cloud virtual server cluster; and receiving a user request. The method also includes, based on the user request, determining whether the cloud virtual server cluster includes virtual servers in an idle state. A virtual server in the idle state refers to a virtual server that is not currently used and the cloud virtual server cluster includes a first present number of virtual servers. Further, the method includes, when the cloud virtual server cluster includes virtual servers in the idle state, scheduling the virtual servers in the idle state to fulfill the user request and, when the cloud virtual server cluster does not include virtual servers in the idle state, creating and initializing a total n number of virtual servers and scheduling the n number of virtual servers to fulfill the user request, wherein n is a number of user request.

Another aspect of the present disclosure includes a cloud virtual server scheduling method. The method includes receiving a user request and, based on the user request, determining whether a cloud virtual server cluster includes virtual servers in an idle state. The virtual server in the idle state refers to a virtual server that is not currently used, and the cloud virtual server cluster includes a first preset number of virtual servers. The method also includes, when the cloud virtual server cluster includes the virtual servers in the idle state, scheduling the virtual servers in the idle state to fulfill the user request.

Another aspect of the present disclosure includes a cloud virtual server scheduling apparatus. The apparatus includes a receiving module, a determining module, and a first scheduling module. The receiving module is configured to receive a user request. The determining module is configured to, based on the user request, determine whether a cloud virtual server cluster includes virtual servers in an idle state. The virtual server in the idle state refers to a virtual server that is not currently used, and the cloud virtual server cluster includes a first preset number of virtual servers. The first scheduling module is configured to, when the cloud virtual server cluster includes the at least n number of virtual servers in the idle state, schedule the virtual servers in the idle state to fulfill the user request.

Other aspects of the present disclosure can be understood by those skilled in the art in light of the description, the claims, and the drawings of the present disclosure.

### BRIEF DESCRIPTION OF THE DRAWINGS

The following drawings are merely examples for illustrative purposes according to various disclosed embodiments and are not intended to limit the scope of the present disclosure.
Figure 1 illustrates a flow chart of an exemplary scheduling process for cloud virtual servers consistent with the disclosed embodiments;
Figure 2 illustrates a flow chart of another exemplary scheduling process for cloud virtual servers consistent with the disclosed embodiments;
Figure 3 illustrates a flow chart of another exemplary scheduling process for cloud virtual servers consistent with the disclosed embodiments;
Figure 4 illustrates a flow chart of another exemplary scheduling process for cloud virtual servers consistent with the disclosed embodiments;
Figure 5 illustrates a structure schematic diagram of an exemplary scheduling apparatus for cloud virtual servers consistent with the disclosed embodiments;
Figure 6 illustrates a structure schematic diagram of another exemplary scheduling apparatus for cloud virtual servers consistent with the disclosed embodiments;
Figure 7 illustrates a structure schematic diagram of another exemplary scheduling apparatus for cloud virtual servers consistent with the disclosed embodiments; and
Figure 8 illustrates a structure schematic diagram of another exemplary scheduling apparatus for cloud virtual servers consistent with the disclosed embodiments.

### DETAILED DESCRIPTION

Reference will now be made in detail to exemplary embodiments of the disclosure, which are illustrated in the accompanying drawings. Wherever possible, the same reference numbers will be used throughout the drawings to refer to the same or like parts.

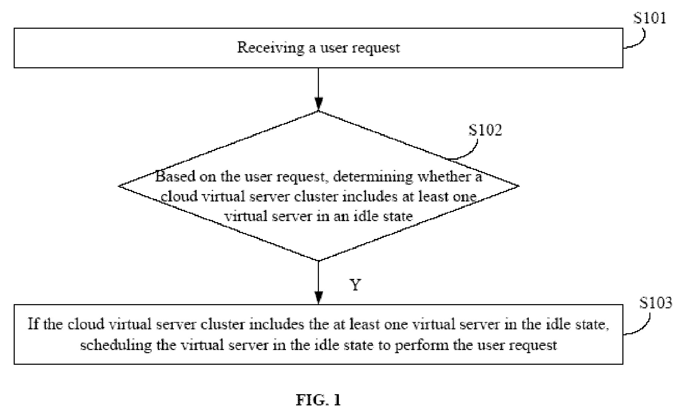

Figure 1 illustrates a flow chart of an exemplary scheduling process for cloud virtual servers consistent with the disclosed embodiments. As shown in Figure 1, the process may include the following steps.

Step S101: a user request is received. The user request refers to a request sent by a user to use a virtual server. After the user request is received, at least one virtual server may be scheduled such that the virtual server can provide services to the user.

Step S102: based on the user request, it is determined whether a cloud virtual server cluster includes at least one virtual server in an idle state. A virtual server in the idle state (or an idle virtual server) refers to a virtual server that is not currently used. A cloud virtual server cluster may include a first preset number of virtual servers.

Specifically, the cloud virtual server cluster refers to a virtual server cluster that includes the first preset number of virtual servers. The virtual server in the idle state (or the idle virtual server) refers to the virtual server that is not currently used, such as a virtual server that is released by another user and is currently in the idle state, a virtual server that remains in the idle state after initialization, a virtual server that is not released by another user but is not currently used.

Thus, after the user request is received, whether the cloud virtual server cluster includes at least one virtual server in the idle state is determined, such that the virtual servers in the idle state can be scheduled according to the user request.

Step S103: if the cloud virtual server cluster includes a virtual server in the idle state, the virtual server in the idle state is scheduled to fulfill the user request.

Specifically, if the cloud virtual server cluster currently includes a virtual server in the idle state, the virtual server in the idle state can be scheduled to fulfill the user request. Thus, the utilization rate of the virtual servers is effectively increased.

Thus, according to disclosed embodiments, based on the user request for access to a virtual server, it is determined whether a cloud virtual server cluster includes any virtual server in the idle state. The virtual server in the idle state (or the idle virtual server) refers to a virtual server that is not currently used. If the cloud virtual server cluster includes at least one virtual server in the idle state, the virtual server in the idle state is scheduled to fulfill the user request. Because whether any virtual server is released by other users is not considered when processing the user request, and as long as the cloud virtual server cluster includes a virtual server in the idle state, the virtual server in the idle state is directly scheduled to fulfill the user request. Thus, the utilization rate of virtual servers is effectively increased, saving resources.

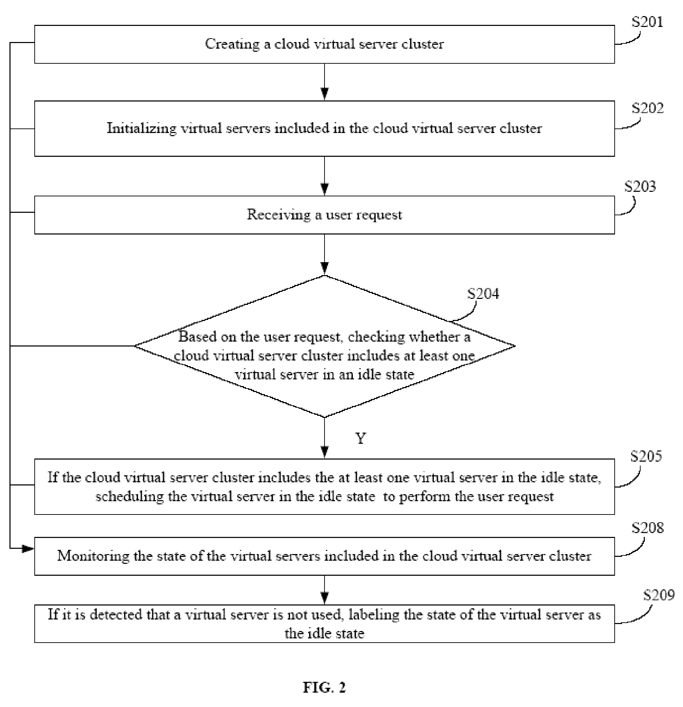

Figure 2 illustrates a flow chart of another exemplary scheduling process for cloud virtual servers consistent with the disclosed embodiments. As shown in Figure 2, the process may include the following steps.

Step S201: a cloud virtual server cluster is created.

Step S202: the virtual servers included in the cloud virtual server cluster are initialized. Specifically, the cloud virtual server cluster is created in advance to include a plurality of virtual servers, and the virtual servers included in the cloud virtual server cluster are initialized after the cloud virtual server cluster is created. After initialization, the virtual servers are in an idle state and can be scheduled to fulfill a user request. Because the virtual servers are created and initialized in advance, when the virtual servers need to be scheduled, the virtual servers can be directly scheduled and used without waiting additional time, thus saving time and improving the user experience.

Step S203: a user request is received.

Step S204: based on the user request, it is determined whether the cloud virtual server cluster includes at least one virtual server in the idle state. The virtual server in the idle state (or the idle virtual server) refers to a virtual server that is not currently used. The cloud virtual server cluster includes the first preset number of virtual servers.

Step S205: if the cloud virtual server cluster includes at least one virtual server in the idle state, the virtual server in the idle state is scheduled to fulfill the user request.

Step S206: if the cloud virtual server cluster does not include any virtual server in the idle state, a n number of virtual servers are created and initiated, wherein n is a number of user requests.

Step S207: the n number of virtual servers are scheduled to perform the user requests.

If all of the virtual servers of the cloud virtual server cluster have been used by the user and so there has no virtual server in the idle state, the n number of virtual servers are additionally created and initiated based on a user request. The virtual servers are then scheduled to perform the user request so as to provide service for the user.

Step S208: the state of the virtual servers included in the cloud virtual server cluster is monitored.

Step S209: if it is detected that a virtual server is not currently used, the state of the virtual server is labeled as the idle state.

In this process, the state of the virtual server included in the cloud virtual server cluster is monitored in real-time. If a virtual server in the cloud virtual server cluster is not currently used, the state of the virtual server is labeled as the idle state. The virtual server that is not currently used may refer to the virtual server that is not currently used after it is released or initialized, or the virtual server that is currently not used by any other user.

Step S210: when the total number of virtual servers included in the cloud virtual server cluster is greater than the first preset number, if the number of the virtual servers in the idle state reaches a second preset number, the virtual servers are recycled or reclaimed gradually, such that the number of virtual servers included in the cloud virtual server cluster is reduced to slightly or approximately greater than or equal to the first preset number.

During the process, if Step S206 and Step S207 are performed, Step S210 may also be performed. That is, whether the number of the virtual servers in the idle state reaches the second preset number is monitored in real-time. When the number of the virtual servers in the idle state reaches the second preset number, it indicates that the number of the virtual servers in the idle state is high. At this time, if the number of the virtual servers included in the cloud virtual server cluster is greater than the first preset number, a part of the virtual servers may be recycled gradually, such that the number of the virtual servers included in the cloud virtual server cluster is reduced to equal to the first preset number or slightly greater than the first preset number.

When the virtual servers are recycled or reclaimed, the virtual servers need to be recycled or reclaimed gradually. A large number of virtual servers in the idle state cannot be recycled within a short period of time. According to the rules of statistics, the peak usage may not come to an end suddenly. The peak usage is decreased gradually. If a large number of virtual servers in the idle state are recycled within a short period of time, a large number of virtual servers need to be re-created at the next time point. Repeatedly creating and recycling a large number of virtual servers within a short period of time may cause the waste of resources. Therefore, the virtual servers in the idle state is gradually recycled, i.e., recycled over a period of time that statistically allow any peak usage to be completed, rather than recycling a large number of virtual servers in the idle state within a short period of time.

It should be noted that Step S208, Step S209 and Step S210 may be performed based on needs or pre-setting configurations. Step S208, Step S209 and Step S210 are not performed in a fixed order in the process, where Step S 210 is performed after Step S206 and Step S207 are performed. In addition, in practical applications, certain steps may be omitted and other Steps may be added accordingly, details of which are not repeated herein.

Thus, according to disclosed embodiments, based on the user request for access to a virtual server, it is determined whether the cloud virtual server cluster includes the virtual server in the idle state. The virtual server in the idle state (or the idle virtual server) refers to the virtual server that is not currently used. If the cloud virtual server cluster includes at least one virtual server in the idle state, the virtual server in the idle state is scheduled to fulfill the user request. Because whether any virtual server is released by other users is not considered when processing the user request, and as long as the cloud virtual server cluster includes a virtual server in the idle state, the virtual server in the idle state is directly scheduled to fulfill the user request. Thus, the utilization rate of virtual servers is effectively increased, saving resources. In addition, because the virtual servers are created and initialized in advance, the virtual servers can be directly scheduled when needed, thus decreasing waiting time and improving the user experience. By monitoring the state of the virtual servers, the virtual servers can be obtained and scheduled in real-time. When the number of the virtual servers in the idle state reaches the second preset number and the total number of the virtual servers is greater than the first preset number, the virtual servers are recycled or reclaimed gradually. The waste of resources caused by repeatedly creating and recycling a large number of virtual servers within a short period of time can be avoided.

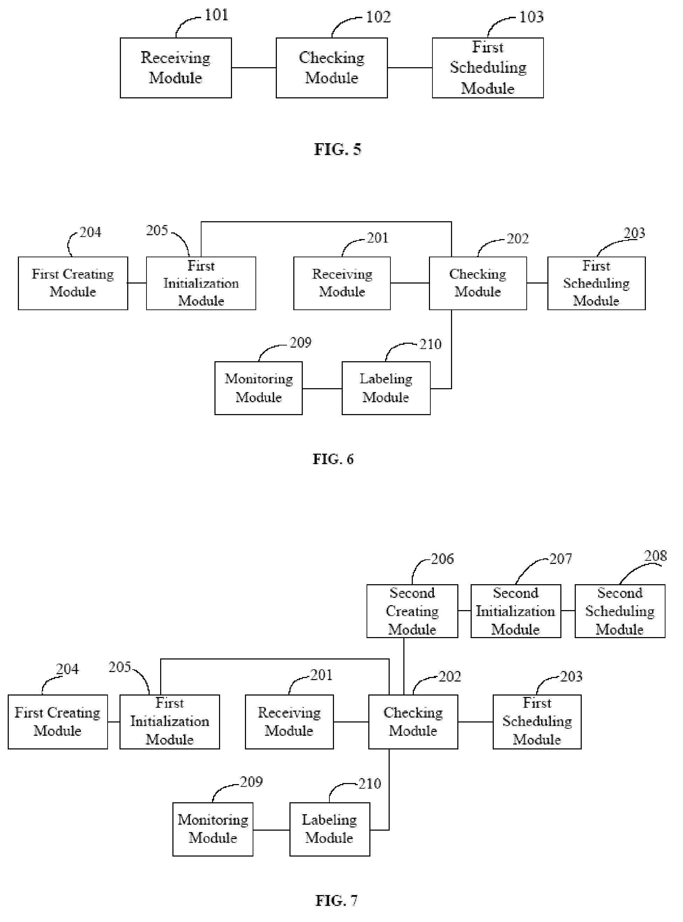

Figure 5 illustrates a structure schematic diagram of an exemplary scheduling apparatus for cloud virtual servers consistent with the disclosed embodiments. As shown in Figure 5, the apparatus may include a receiving module 101, a determining module 102, and a first scheduling module 103. Certain components may be omitted and other components may be added. Each of the modules can be processed by one or more computer systems. It should be noted that the apparatus shown in Figure 5 can perform the steps illustrated in Figure 1 to Figure 4.

The receiving module 101 may be configured to receive a user request. The user request refers to a request sent by a user to use a virtual server. After the user request is received, at least one virtual server may be scheduled such that the virtual server can provide services to the user.

The determining module 102 may be configured to, based on the user request, determine whether a cloud virtual server cluster includes at least one virtual server in an idle state. A virtual server in the idle state (or an idle virtual server) refers to the virtual server that is not currently used. A cloud virtual server cluster may include a first number of virtual servers.

The cloud virtual server cluster includes the first preset number of virtual servers. The virtual server in the idle state (or the idle virtual server) refers to the virtual server that is not currently used, such as the virtual server that is released by another user and is currently in the idle state, the virtual server that is always in the idle state after initialization, or the virtual server that is not released by another user but is currently not used.

Thus, after the user request is received, the determining module 102 determines whether the cloud virtual server cluster includes at least one virtual server in the idle state, such that the virtual servers in the idle state can be scheduled according to the user request.

The first scheduling module 103 may be configured to, when the cloud virtual server cluster includes a virtual server in the idle state, schedule the virtual server in the idle state to fulfill the user request.

If the cloud virtual server cluster currently includes a virtual server in the idle state, the virtual server in the idle state can be scheduled to fulfill the user request. Therefore, the utilization rate of the virtual servers can be effectively increased.

Thus, according to disclosed embodiments, based on the user request for access to a virtual server, it is determined whether a cloud virtual server cluster includes any virtual server in the idle state. The virtual server in the idle state (or the idle virtual server) refers to a virtual server that is not currently used. If the cloud virtual server cluster includes at least one virtual server in the idle state, the virtual server in the idle state is scheduled to fulfill the user request. Because whether any virtual server is released by other users is not considered when processing the user request, and as long as the cloud virtual server cluster includes a virtual server in the idle state, the virtual server in the idle state is directly scheduled to fulfill the user request. Thus, the utilization rate of virtual servers is effectively increased, saving resources.

With reference to Figs. 6-8, Figure 6-8 show three embodiments of scheduling apparatus for cloud virtual servers according to the present invention. The apparatus of the three embodiments are similar to the apparatus as shown in Figure 5, and the similar part and relative description thereof refer to Figure 5. The following description only illustrates differences.

Figure 6 illustrates a structure schematic diagram of another exemplary scheduling apparatus for cloud virtual servers consistent with the disclosed embodiments. As shown in Figure 6, the apparatus may include a receiving module 201, a determining module 202, a first scheduling module 203, a first creating module 204, a first initialization module 205, a monitoring module 209, and a labeling module 210. Certain components may be omitted and other components may be added. Each of the modules can be processed by one or more computer systems. It should be noted that the apparatus shown in Figure 6 can perform the steps shown in Figure 2.

The receiving module 201 may be configured to receive a user request. The determining module 202 may be configured to, based on the user request, determine whether a cloud virtual server cluster includes at least one virtual server in an idle state. The virtual server in the idle state (or the idle virtual server) refers to the virtual server that is not currently used. A cloud virtual server cluster includes a first preset number of virtual servers.

The first scheduling module 203 may be configured to, when the cloud virtual server cluster includes a virtual server in the idle state, schedule the virtual server in the idle state to fulfill the user request.

The first creating module 204 may be configured to create a cloud virtual server cluster including a first preset number of virtual servers. The first initialization module 205 may be configured to initialize the first preset number of virtual servers included in the cloud virtual server cluster.

Specifically, the cloud virtual server cluster is created in advance to include the first preset number of virtual servers. The virtual servers included in the cloud virtual server cluster are initialized after the cloud virtual server cluster is created. After initialization, the virtual servers are in an idle state, and can be scheduled when the user request is received. Because the virtual servers are created and initialized in advance, when the virtual servers need to be scheduled, the virtual servers can be directly scheduled and used without waiting additional time, thus saving time and improving the user experience.

The monitoring module 209 may be configured to monitor the state of the virtual servers in the cloud virtual server cluster. The labeling module 210 may be configured to, when one or more virtual servers are not currently used, label the state of the virtual servers that are not currently used as the idle state.

As to the above apparatus, states of the virtual servers of the cloud virtual server cluster are monitored in real time. If the virtual server, which is not currently used, is monitored, the state of this virtual server is marked as a virtual server in the idle state. The virtual server, which is not currently used, may be a virtual server that is not currently used, such as the virtual server that is released by another user and is currently in the idle state, the virtual server that is always in the idle state after initialization, or the virtual server.

Figure 7 illustrates a structure schematic diagram of another exemplary scheduling apparatus for cloud virtual servers consistent with the disclosed embodiments. As shown in Figure 7, the apparatus further includes a receiving module 201, a determining module 202, a first scheduling module 203, a first creating module 204, a first initialization module 205, a monitoring module 209, a labeling module 210, a second creating module 206, a second initialization module 207, and a second scheduling module 208.

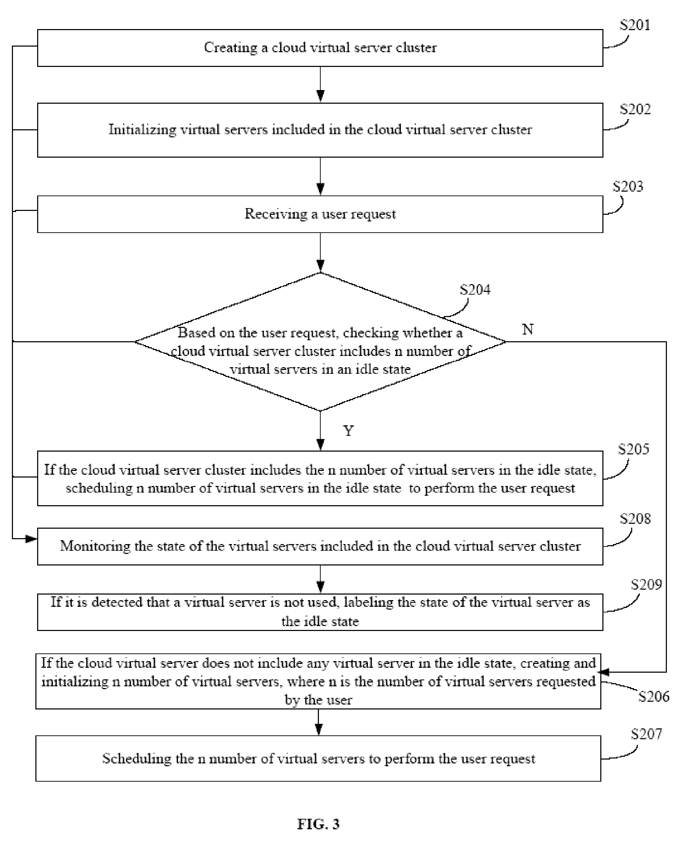

The receiving module 201, the determining module 202, the first scheduling module 203, the first creating module 204, the first initialization module 205, the monitoring module 209, and the labeling module 210 may have the same functionalities as the corresponding modules shown in Figure 6. Certain components may be omitted and other components may be added. Each of the modules can be processed by one or more computer systems. It should be noted that the apparatus shown in Figure 7 can perform the steps illustrated in Figure 3.

The second creating module 206 may be configured to, when the cloud virtual server cluster does not include the n number of virtual servers in an idle state, create a total n number of virtual servers, where n is the number of virtual servers requested by a user.

The second initialization module 207 may be configured to initialize the n number of virtual servers. The second scheduling module 208 may be configured to schedule the n number of virtual servers to fulfill the user request.

Specifically, when the virtual servers included in the cloud virtual server cluster are used by the users and there are no sufficient virtual servers in the idle state, the n number of virtual servers can be created and initialized again based on the number of virtual servers requested by the user. Then, the n number of newly created virtual servers may be scheduled to fulfill the user request and provide services to the user.

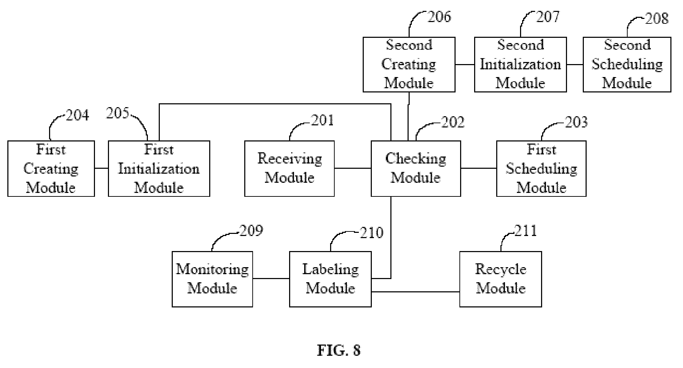

Figure 8 illustrates a structure schematic diagram of another exemplary scheduling apparatus for cloud virtual servers consistent with the disclosed embodiments. As shown in Figure 8, the apparatus may include a receiving module 201, a determining module 202, a first scheduling module 203, a first creating module 204, a first initialization module 205, a monitoring module 209, a labeling module 210, a second creating module 206, a second initialization module 207, a second scheduling module 208, and a recycle module 211.

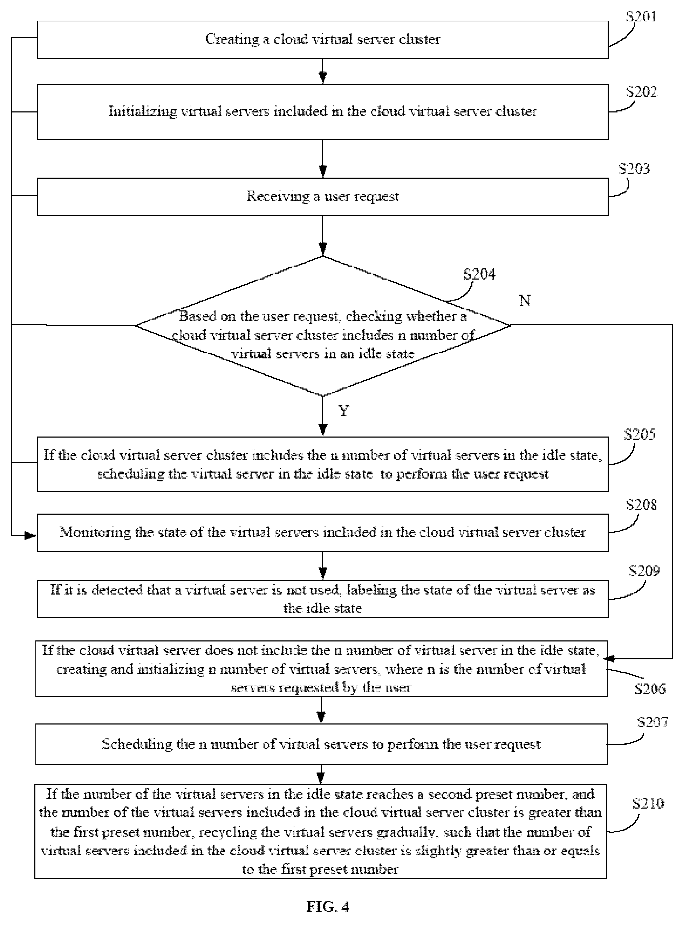

The receiving module 201, the determining module 202, the first scheduling module 203, the first creating module 204, the first initialization module 205, the monitoring module 209, the labeling module 210, the second creating module 206, the second initialization module 207, and the second scheduling module 208 may have the same functionalities as the corresponding modules shown in Figure 7. Each of the modules can be processed by one or more computer systems or cloud servers. It should be noted that the apparatus shown in Figure 8 may perform the steps illustrated in Figure 4.

The recycle module 211 may be configured to, when the total number of virtual servers included in the cloud virtual server cluster is greater than the first preset number, if the number of the virtual servers in the idle state reaches a second preset number, gradually recycle or reclaim the virtual servers, such that the number of the virtual servers in the cloud virtual server cluster is reduced to slightly greater than or equal to the first preset number.

Further, if the apparatus includes the second creating module 206, the second initialization module 207, and the second scheduling module 208, the number of virtual servers in the idle state may be monitored in real-time. When the number of the virtual servers in the idle state reaches the second preset number, it indicates that the number of the virtual servers that are not used is large. At this time, if the number of virtual servers in the cloud virtual server cluster is greater than the first preset number, a part of the virtual servers may be recycled, such that the virtual servers in the cloud virtual server cluster is reduced to equal to or slightly greater than the first preset number. When the virtual servers are recycled or reclaimed, the virtual servers need to be recycled or reclaimed gradually. A large number of virtual servers in the idle state cannot be recycled suddenly. In addition, in practical applications, certain modules or units may be omitted or added, details of which are not repeated herein.

Thus, according to disclosed embodiments, based on the user request for access to a virtual server, it is determined whether the cloud virtual server cluster includes the virtual server in the idle state. The virtual server in the idle state (or the idle virtual server) refers to the virtual server that is not currently used. If the cloud virtual server cluster includes at least one virtual server in the idle state, the virtual server in the idle state is scheduled to fulfill the user request. Because whether any virtual server is released by other users is not considered when processing the user request, and as long as the cloud virtual server cluster includes a virtual server in the idle state, the virtual server in the idle state is directly scheduled to fulfill the user request. Thus, the utilization rate of virtual servers is effectively increased, saving resources. In addition, because the virtual servers are created and initialized in advance, the virtual servers can be directly scheduled when needed, thus decreasing waiting time and improving the user experience. By monitoring the state of the virtual servers, the virtual servers can be obtained and scheduled in real-time. When the number of the virtual servers in the idle state reaches the second preset number and the total number of the virtual servers in the cloud virtual server cluster is greater than the first preset number, the virtual servers are recycled or reclaimed gradually. The waste of resources caused by repeatedly creating and recycling a large number of virtual servers within a short period of time can be avoided.

Other steps may be referred to above descriptions with respect to the system for making a unified attractiveness prediction. Other applications, advantages, alternations, modifications, or equivalents to the disclosed embodiments are obvious to those skilled in the art.

## Claims

1. A cloud virtual server scheduling method, comprising:
creating a cloud virtual server cluster including a first preset number of virtual servers;
initializing the first preset number of virtual servers included in the cloud virtual server cluster;
receiving a user request;
based on the user request, determining whether the cloud virtual server cluster includes virtual servers in an idle state, wherein a virtual server in the idle state refers to a virtual server that is not currently used, the cloud virtual server cluster includes a first present number of virtual servers;
when the cloud virtual server cluster includes virtual servers in the idle state, scheduling the virtual servers in the idle state to fulfill the user request;
when the cloud virtual server cluster does not include t virtual servers in the idle state, creating and initializing a total n number of virtual servers, wherein n is a number of user request; and
scheduling the n number of virtual servers to fulfill the user request.

2. The method according to claim 1, further including:
when the total number of the virtual servers in the idle state reaches a second preset number, and the total number of virtual servers included in the cloud virtual server cluster is greater than the first preset number, gradually recycling the virtual servers, such that the total number of the virtual servers included in the cloud virtual server cluster is reduced to approximately greater than or equal to the first preset number.

3. The method according to claim 1, further including:
monitoring the state of virtual servers included in the cloud virtual server cluster; and
labeling the state of a virtual server that is not currently used as the idle state.

4. A cloud virtual server scheduling method, comprising:
receiving a user request;
based on the user request, determining whether a cloud virtual server cluster includes virtual servers in an idle state, wherein the virtual server in the idle state refers to a virtual server that is not currently used, and the cloud virtual server cluster includes a first preset number of virtual servers; and
when the cloud virtual server cluster includes virtual servers in the idle state, scheduling the virtual servers in the idle state to fulfill the user request.

5. The method according to claim 4, before receiving a user request, further including:
creating the cloud virtual server cluster; and
initializing the virtual servers included in the cloud virtual server cluster.

6. The method according to claim 4, after determining whether a cloud virtual server cluster includes virtual servers in the idle state, further including:
when the cloud virtual server cluster does not include virtual servers in the idle state, creating and initializing a total n number of virtual servers, wherein n is a number of user requests; and
scheduling the n number of virtual servers to fulfill the user request;

7. The method according to claim 5, further including:
when the total number of the virtual servers in the idle state reaches a second preset number, and the total number of virtual servers included in the cloud virtual server cluster is greater than the first preset number, gradually recycling the virtual servers, such that the number of the virtual servers included in the cloud virtual server cluster is reduced to slightly greater than or equal to the first preset number.

8. The method according to claim 4, further including:
monitoring the state of virtual servers included in the cloud virtual server cluster; and
labeling the state of a virtual server that is not currently used as the idle state.

9. A cloud virtual server scheduling apparatus, comprising:
a receiving module configured to receive a user request;
a determining module configured to, based on the user request, determine whether a cloud virtual server cluster includes virtual servers in an idle state, wherein the virtual server in the idle state refers to a virtual server that is not currently used, and the cloud virtual server cluster includes a first preset number of virtual servers; and
a first scheduling module configured to, when the cloud virtual server cluster includes virtual servers in the idle state, schedule the virtual servers in the idle state to fulfill the user request.

10. The apparatus according to claim 9, further including:
a first creating module configured to create the cloud virtual server cluster; and
a first initialization module configured to initialize the virtual servers included in the cloud virtual server cluster.

11. The apparatus according to claim 9, further including:
a second creating module configured to, when the cloud virtual server cluster does not include virtual servers in the idle state, create a total n number of virtual servers, wherein n is a number of user requests;
a second initialization module configured to initialize the n number of virtual servers; and
a second scheduling module configured to schedule the n number of virtual servers to fulfill the user request.

12. The apparatus according to claim 11, further including:
a recycle module configured to, when a total number of the virtual servers in the idle state reaches a second preset number, and the number of virtual servers included in the cloud virtual server cluster is greater than the first preset number, gradually recycle the virtual servers, such that the total number of the virtual servers included in the cloud virtual server cluster is reduced to slightly greater than or equal to the first preset number.

13. The apparatus according to claim 9, further including:
a monitoring module configured to monitor the state of virtual servers included in the cloud virtual server cluster; and
a labeling module configured to label the state of a virtual server that is not currently used as the idle state.
